# EUROPEAN PATENT APPLICATION

(11) **EP 2 169 622 A1**
(43) Date of publication of application: **31.03.2010**
(21) Application number: 08253164.1
(22) Date of filing: 29.09.2008
(51) Int. Cl.: G06T 7/00

(54) **Apparatus and method of image analysis**

(71) Applicant: Sony Computer Entertainment Europe Limited, London W1F 7LP (GB)
(72) Inventor: Campbell, Diarmid, London W1F 7LP (GB)
(74) Representative: Turner, James Arthur

(57) **Abstract**

A method of processing an image comprises the steps defining, for a pair of pixels of the image that touch each other on one edge, a boundary entity between them (referred to hereafter as an 'edgel'), such that each of the pair of pixels border the edgel, and evaluating one or more properties of the image by analysis of one or more properties of edgels defined in dependence upon the image.

## Description

The present invention relates to an apparatus and method of image analysis.

In many fields of image analysis it is useful to determine the outline (otherwise known as the contour) of an object in an image. Such a process may, for example, be a precursor to an image recognition process, and/or to analysing the relative angle of a known object with respect to a viewpoint, or to determining where to apply respective compression ratios in the foreground and background of video images. It may also be used to achieve an artistic effect, such as to determine a mask for including or excluding a further image manipulation.

For two dimensional images, generally a threshold brightness value is chosen, and where two adjoining pixels are on either side of the threshold, one or the other is demarcated as the edge.

In the so-called *Marching Squares* algorithm, the tracking of an edge is achieved by constructing a set of rules based upon the pattern found in a 2x2 test set of pixels. Depending on which of the pixels fall above or below the threshold brightness value, the test set moves in a certain direction. The emergent property of the rules is that the test set should navigate around an object in an image whilst identifying which pixels form the boundary of the object.

In many of the applications listed above, for two-dimensional images it will be important to determine the contour accurately and with a degree of consistency, and to determine whether a contour is open or closed.

In practice, this is not always simple.

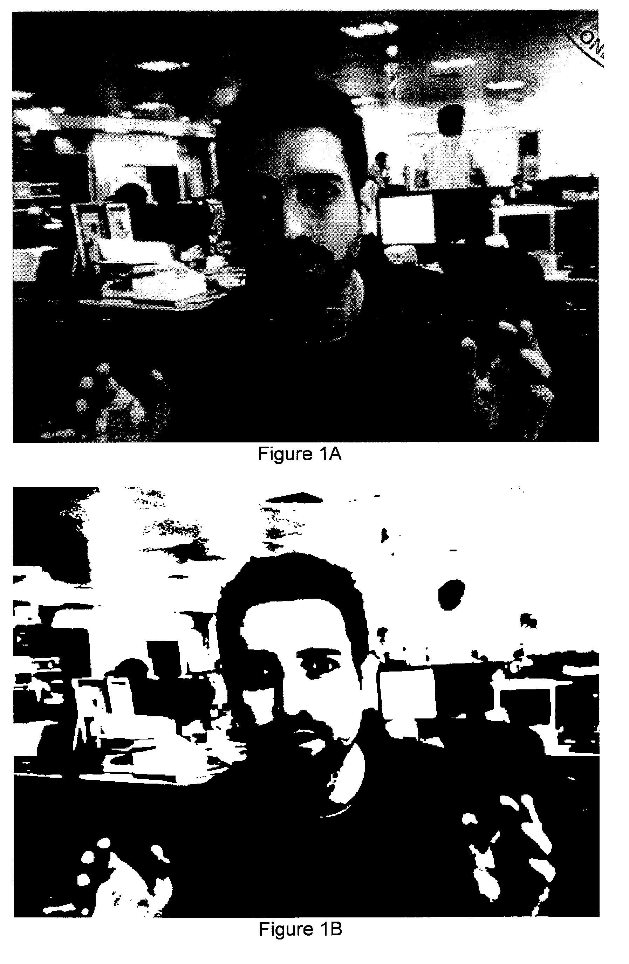

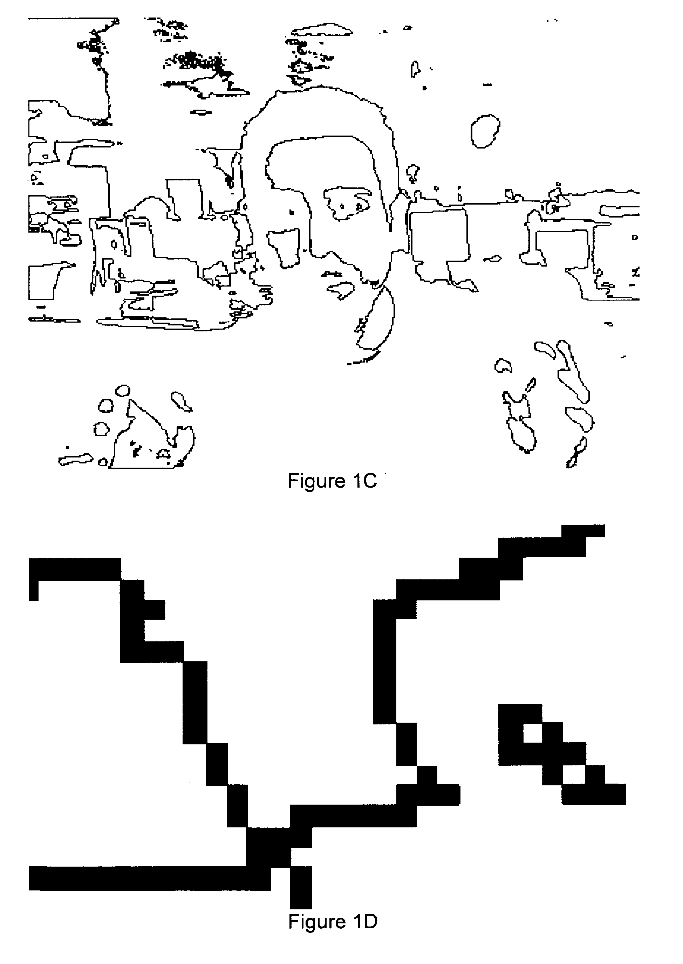

Referring to Figures 1A and 1B of the accompanying drawings, typically contours are generated using a version of an image to which a binary threshold has been applied. Thus, for example, Figure 1B is a binary threshold image of the picture shown in Figure 1A. The threshold is usually chosen to provide good selectivity between an object of interest and the background, or to resolve the features of such an object. For example, the threshold used to generate Figure 1B was selected to provide good selectivity within grey scale levels corresponding to the skin tones of the person in the picture. Referring to Figure 1C, prior art systems may then generate a contour by marking for each pixel in the binary image any transition from white to black (or vice versa in an alternate system) between the pixel under consideration and its immediate neighbours (either in four directions - up, down, left and right, or in eight directions, including the diagonals).

However, referring now also to Figure 1D (an expanded section of Figure 1C), in real-world images such as that of Figure 1A the resulting contours can include ambiguous junctions such as that seen in the lower portion of Figure 1D, which may equally represent two lines crossing, or horizontally adjacent contours or vertically adjacent contours, and can also include one-way streets (spurs or lines of one or more pixels that terminate without connecting to a further line). Such ambiguities serve to make the accurate determination of a closed contour (i.e. an outline that returns to its starting point, so encapsulating a region) very difficult.

Thus there is a need for an improved apparatus and method of contour generation and evaluation.

The present invention seeks to mitigate or alleviate the above need.

In a first aspect of the present invention, a method of processing an image comprises the steps defining, for a pair of pixels of the image that touch each other on one edge, a boundary entity between them (referred to hereafter as an 'edgel'), such that each of the pair of pixels border the edgel, and evaluating one or more properties of the image by analysis of one or more properties of edgels defined in dependence upon the image.

In another aspect of the present invention, an apparatus for processing an image comprises an image processing means arranged to define, for a pair of pixels of the image that touch each other on one edge, a boundary entity between them (referred to hereafter as an 'edgel'), such that each of the pair of pixels border the edgel, and an image evaluating means arrange to evaluate one or more properties of the image by analysis of one or more properties of edgels defined in dependence upon the image.

Further respective aspects and features of the invention are defined in the appended claims.

Embodiments of the present invention will now be described by way of example with reference to the accompanying drawings, in which:
Figures 1A-1D are schematic diagrams of a grey-scale image, a binary thresholded image, a prior-art contour image and a detail from the prior-art contour image;
Figure 2 is a schematic diagram of an entertainment device;
Figure 3 is a schematic diagram of a cell processor;
Figure 4 is a schematic diagram of a video graphics processor;
Figure 5 is a schematic diagram of a binary image;
Figure 6A is a schematic diagram of regions of the binary image using four-way connectivity;
Figure 6B is a schematic diagram of regions of the binary image using eight-way connectivity;
Figure 6C is a schematic diagram of a marching squares algorithm operating on a binary image;
Figure 7A is a schematic diagram of contours of the binary image using four-way connectivity;
Figure 7B is a schematic diagram of contours of the binary image using eight-way connectivity;
Figures 8A-B are schematic diagrams of so-called 'edgels', in accordance with an embodiment of the present invention;
Figure 9 is a schematic diagram of edgels corresponding to a binary image, in accordance with an embodiment of the present invention;
Figure 10 is a chart relating pixel patterns or configurations with edgel patterns or configurations and associated edgel codes, in accordance with an embodiment of the present invention;
Figure 11 is a schematic diagram of edgel codes corresponding to a binary image, in accordance with an embodiment of the present invention;
Figure 12 is a schematic diagram of edgel tracking, in accordance with an embodiment of the present invention;
Figure 13 is a schematic diagram of edgel tracking, in accordance with an embodiment of the present invention;
Figure 14 is a schematic diagram of edgel tracking, in accordance with an embodiment of the present invention;
Figure 15 is a schematic diagram of contour characterisation, in accordance with an embodiment of the present invention;
Figure 16 is a is a schematic diagram of contour area evaluation, in accordance with an embodiment of the present invention;
Figure 17 is a is a schematic diagram of a subsection of a binary image; and
Figure 18 is a flow diagram of a method of image analysis in accordance with an embodiment of the present invention.

An apparatus and method of image analysis are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

It is anticipated that a suitable apparatus to implement the method of image analysis disclosed herein is the Sony® Playstation 3® entertainment device.

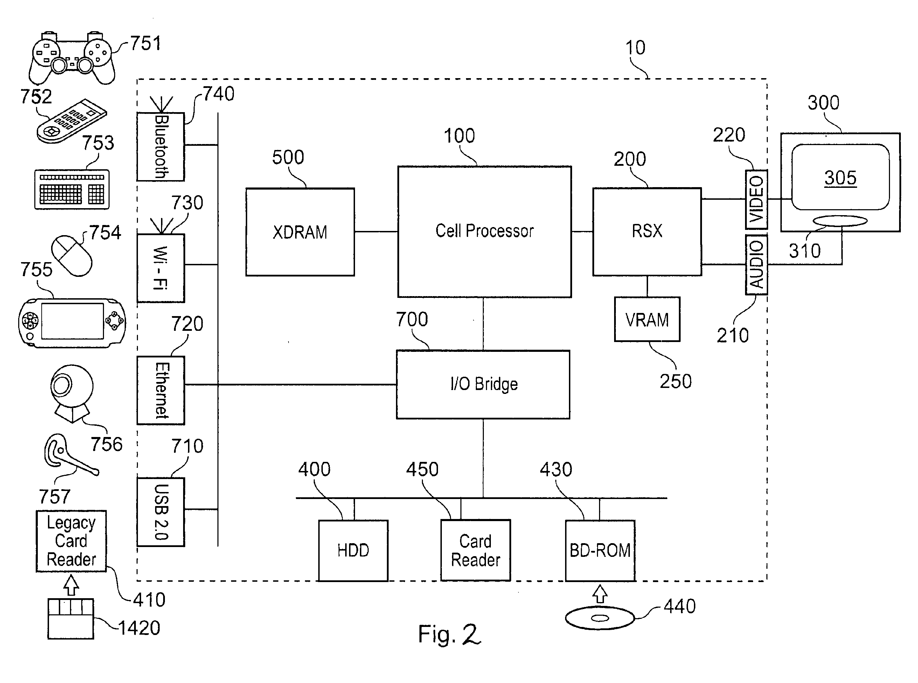

Figure 2 schematically illustrates the overall system architecture of the Sony® Playstation 3® entertainment device. A system unit 10 is provided, with various peripheral devices connectable to the system unit.

The system unit 10 comprises: a Cell processor 100; a Rambus® dynamic random access memory (XDRAM) unit 500; a Reality Synthesiser graphics unit 200 with a dedicated video random access memory (VRAM) unit 250; and an I/O bridge 700.

The system unit 10 also comprises a Blu Ray® Disk BD-ROM® optical disk reader 430 for reading from a disk 440 and a removable slot-in hard disk drive (HDD) 400, accessible through the I/O bridge 700. Optionally the system unit also comprises a memory card reader 450 for reading compact flash memory cards, Memory Stick® memory cards and the like, which is similarly accessible through the I/O bridge 700.

The I/O bridge 700 also connects to four Universal Serial Bus (USB) 2.0 ports 710; a gigabit Ethernet port 720; an IEEE 802.11b/g wireless network (Wi-Fi) port 730; and a Bluetooth® wireless link port 740 capable of supporting up to seven Bluetooth connections.

In operation the I/O bridge 700 handles all wireless, USB and Ethernet data, including data from one or more game controllers 751. For example when a user is playing a game, the I/O bridge 700 receives data from the game controller 751 via a Bluetooth link and directs it to the Cell processor 100, which updates the current state of the game accordingly.

The wireless, USB and Ethernet ports also provide connectivity for other peripheral devices in addition to game controllers 751, such as: a remote control 752; a keyboard 753; a mouse 754; a portable entertainment device 755 such as a Sony Playstation Portable® entertainment device; a video camera such as an EyeToy® video camera 756; and a microphone headset 757. Such peripheral devices may therefore in principle be connected to the system unit 10 wirelessly; for example the portable entertainment device 755 may communicate via a Wi-Fi ad-hoc connection, whilst the microphone headset 757 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 410 may be connected to the system unit via a USB port 710, enabling the reading of memory cards 420 of the kind used by the Playstation® or Playstation 2® devices.

In the present embodiment, the game controller 751 is operable to communicate wirelessly with the system unit 10 via the Bluetooth link. However, the game controller 751 can instead be connected to a USB port, thereby also providing power by which to charge the battery of the game controller 751. In addition to one or more analogue joysticks and conventional control buttons, the game controller is sensitive to motion in 6 degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the Playstation Portable device may be used as a controller. In the case of the Playstation Portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 752 is also operable to communicate wirelessly with the system unit 10 via a Bluetooth link. The remote control 752 comprises controls suitable for the operation of the Blu Ray Disk BD-ROM reader 430 and for the navigation of disk content.

The Blu Ray Disk BD-ROM reader 430 is operable to read CD-ROMs compatible with the Playstation and PlayStation 2 devices, in addition to conventional pre-recorded and recordable CDs, and so-called Super Audio CDs. The reader 430 is also operable to read DVD-ROMs compatible with the Playstation 2 and PlayStation 3 devices, in addition to conventional pre-recorded and recordable DVDs. The reader 430 is further operable to read BD-ROMs compatible with the Playstation 3 device, as well as conventional pre-recorded and recordable Blu-Ray Disks.

The system unit 10 is operable to supply audio and video, either generated or decoded by the Playstation 3 device via the Reality Synthesiser graphics unit 200, through audio and video connectors to a display and sound output device 300 such as a monitor or television set having a display 305 and one or more loudspeakers 310. The audio connectors 210 may include conventional analogue and digital outputs whilst the video connectors 220 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 100. The Playstation 3 device's operating system supports Dolby® 5.1 surround sound, Dolby® Theatre Surround (DTS), and the decoding of 7.1 surround sound from Blu-Ray® disks.

In the present embodiment, the video camera 756 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 10. The camera LED indicator is arranged to illuminate in response to appropriate control data from the system unit 10, for example to signify adverse lighting conditions. Embodiments of the video camera 756 may variously connect to the system unit 10 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 10, an appropriate piece of software such as a device driver should be provided. Device driver technology is well-known and will not be described in detail here, except to say that the skilled man will be aware that a device driver or similar software interface may be required in the present embodiment described.

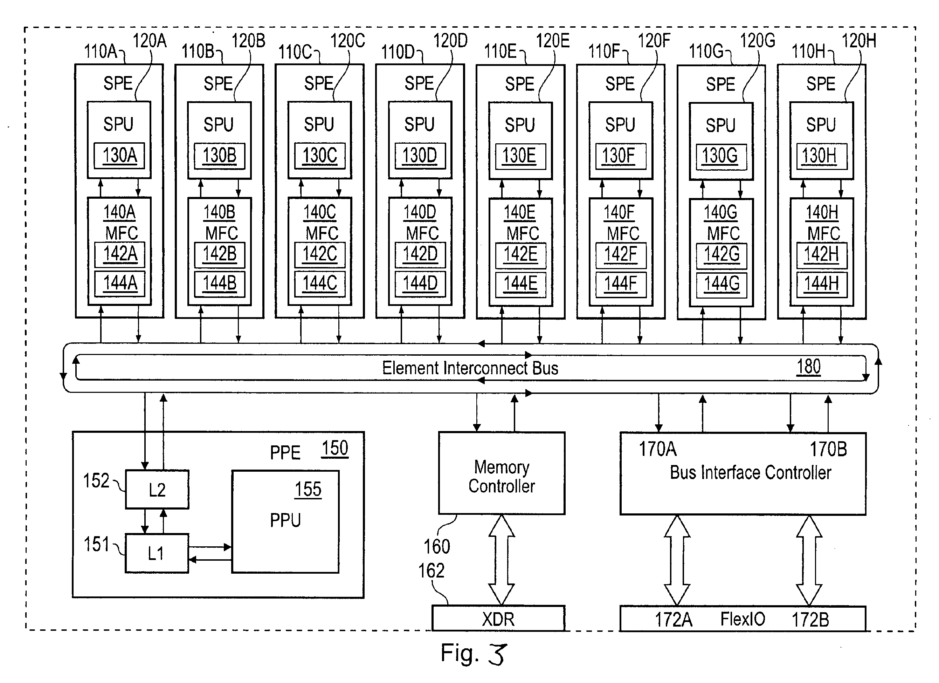

Referring now to Figure 3, the Cell processor 100 has an architecture comprising four basic components: external input and output structures comprising a memory controller 160 and a dual bus interface controller 170A,B; a main processor referred to as the Power Processing Element 150; eight co-processors referred to as Synergistic Processing Elements (SPEs) 110A-H; and a circular data bus connecting the above components referred to as the Element Interconnect Bus 180. The total floating point performance of the Cell processor is 218 GFLOPS, compared with the 6.2 GFLOPs of the Playstation 2 device's Emotion Engine.

The Power Processing Element (PPE) 150 is based upon a two-way simultaneous multithreading Power 970 compliant PowerPC core (PPU) 155 running with an internal clock of 3.2 GHz. It comprises a 512 kB level 2 (L2) cache and a 32 kB level 1 (L1) cache. The PPE 150 is capable of eight single position operations per clock cycle, translating to 25.6 GFLOPs at 3.2 GHz. The primary role of the PPE 150 is to act as a controller for the Synergistic Processing Elements 110A-H, which handle most of the computational workload. In operation the PPE 150 maintains a job queue, scheduling jobs for the Synergistic Processing Elements 110A-H and monitoring their progress. Consequently each Synergistic Processing Element 110A-H runs a kernel whose role is to fetch a job, execute it and synchronise with the PPE 150.

Each Synergistic Processing Element (SPE) 110A-H comprises a respective Synergistic Processing Unit (SPU) 120A-H, and a respective Memory Flow Controller (MFC) 140A-H comprising in turn a respective Dynamic Memory Access Controller (DMAC) 142AH, a respective Memory Management Unit (MMU) 144A-H and a bus interface (not shown). Each SPU 120A-H is a RISC processor clocked at 3.2 GHz and comprising 256 kB local RAM 130A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 120A-H does not directly access the system memory XDRAM 500; the 64-bit addresses formed by the SPU 120A-H are passed to the MFC 140A-H which instructs its DMA controller 142A-H to access memory via the Element Interconnect Bus 180 and the memory controller 160.

The Element Interconnect Bus (EIB) 180 is a logically circular communication bus internal to the Cell processor 100 which connects the above processor elements, namely the PPE 150, the memory controller 160, the dual bus interface 170A,B and the 8 SPEs 110A-H, totalling 12 participants. Participants can simultaneously read and write to the bus at a rate of 8 bytes per clock cycle. As noted previously, each SPE 110A-H comprises a DMAC 142A-H for scheduling longer read or write sequences. The EIB comprises four channels, two each in clockwise and anti-clockwise directions. Consequently for twelve participants, the longest step-wise data-flow between any two participants is six steps in the appropriate direction. The theoretical peak instantaneous EIB bandwidth for 12 slots is therefore 96B per clock, in the event of full utilisation through arbitration between participants. This equates to a theoretical peak bandwidth of 307.2 GB/s (gigabytes per second) at a clock rate of 3.2GHz.

The memory controller 160 comprises an XDRAM interface 162, developed by Rambus Incorporated. The memory controller interfaces with the Rambus XDRAM 500 with a theoretical peak bandwidth of 25.6 GB/s.

The dual bus interface 170A,B comprises a Rambus FlexIO® system interface 172A,B. The interface is organised into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 700 via controller 170A and the Reality Simulator graphics unit 200 via controller 170B.

Data sent by the Cell processor 100 to the Reality Simulator graphics unit 200 will typically comprise display lists, being a sequence of commands to draw vertices, apply textures to polygons, specify lighting conditions, and so on.

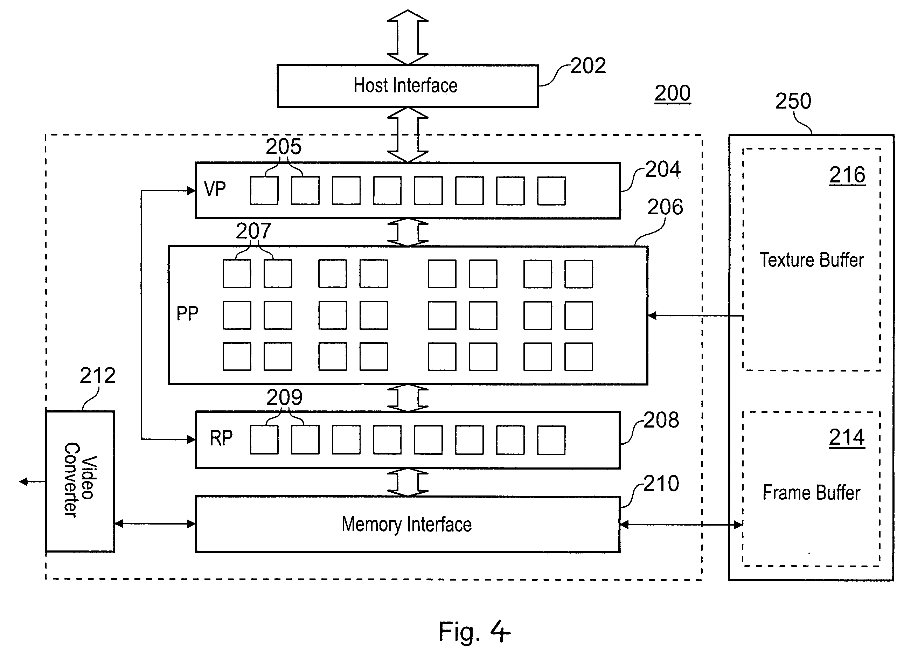

Referring now to Figure 4, the Reality Simulator graphics (RSX) unit 200 is a video accelerator based upon the NVidia® G70/71 architecture that processes and renders lists of commands produced by the Cell processor 100. The RSX unit 200 comprises a host interface 202 operable to communicate with the bus interface controller 170B of the Cell processor 100; a vertex pipeline 204 (VP) comprising eight vertex shaders 205; a pixel pipeline 206 (PP) comprising 24 pixel shaders 207; a render pipeline 208 (RP) comprising eight render output units (ROPs) 209; a memory interface 210; and a video converter 212 for generating a video output. The RSX 200 is complemented by 256 MB double data rate (DDR) video RAM (VRAM) 250, clocked at 600MHz and operable to interface with the RSX 200 at a theoretical peak bandwidth of 25.6 GB/s. In operation, the VRAM 250 maintains a frame buffer 214 and a texture buffer 216. The texture buffer 216 provides textures to the pixel shaders 207, whilst the frame buffer 214 stores results of the processing pipelines. The RSX can also access the main memory 500 via the EIB 180, for example to load textures into the VRAM 250.

The vertex pipeline 204 primarily processes deformations and transformations of vertices defining polygons within the image to be rendered.

The pixel pipeline 206 primarily processes the application of colour, textures and lighting to these polygons, including any pixel transparency, generating red, green, blue and alpha (transparency) values for each processed pixel. Texture mapping may simply apply a graphic image to a surface, or may include bump-mapping (in which the notional direction of a surface is perturbed in accordance with texture values to create highlights and shade in the lighting model) or displacement mapping (in which the applied texture additionally perturbs vertex positions to generate a deformed surface consistent with the texture).

The render pipeline 208 performs depth comparisons between pixels to determine which should be rendered in the final image. Optionally, if the intervening pixel process will not affect depth values (for example in the absence of transparency or displacement mapping) then the render pipeline and vertex pipeline 204 can communicate depth information between them, thereby enabling the removal of occluded elements prior to pixel processing, and so improving overall rendering efficiency. In addition, the render pipeline 208 also applies subsequent effects such as full-screen anti-aliasing over the resulting image.

Both the vertex shaders 205 and pixel shaders 207 are based on the shader model 3.0 standard. Up to 136 shader operations can be performed per clock cycle, with the combined pipeline therefore capable of 74.8 billion shader operations per second, outputting up to 840 million vertices and 10 billion pixels per second. The total floating point performance of the RSX 200 is 1.8 TFLOPS.

Typically, the RSX 200 operates in close collaboration with the Cell processor 100; for example, when displaying an explosion, or weather effects such as rain or snow, a large number of particles must be tracked, updated and rendered within the scene. In this case, the PPU 155 of the Cell processor may schedule one or more SPEs 110A-H to compute the trajectories of respective batches of particles. Meanwhile, the RSX 200 accesses any texture data (e.g. snowflakes) not currently held in the video RAM 250 from the main system memory 500 via the element interconnect bus 180, the memory controller 160 and a bus interface controller 170B. The or each SPE 110A-H outputs its computed particle properties (typically coordinates and normals, indicating position and attitude) directly to the video RAM 250; the DMA controller 142A-H of the or each SPE 110A-H addresses the video RAM 250 via the bus interface controller 170B. Thus in effect the assigned SPEs become part of the video processing pipeline for the duration of the task.

In general, the PPU 155 can assign tasks in this fashion to six of the eight SPEs available; one SPE is reserved for the operating system, whilst one SPE is effectively disabled. The disabling of one SPE provides a greater level of tolerance during fabrication of the Cell processor, as it allows for one SPE to fail the fabrication process. Alternatively if all eight SPEs are functional, then the eighth SPE provides scope for redundancy in the event of subsequent failure by one of the other SPEs during the life of the Cell processor.

The PPU 155 can assign tasks to SPEs in several ways. For example, SPEs may be chained together to handle each step in a complex operation, such as accessing a DVD, video and audio decoding, and error masking, with each step being assigned to a separate SPE. Alternatively or in addition, two or more SPEs may be assigned to operate on input data in parallel, as in the particle animation example above.

Software instructions implemented by the Cell processor 100 and/or the RSX 200 may be supplied at manufacture and stored on the HDD 400, and/or may be supplied on a data carrier or storage medium such as an optical disk or solid state memory, or via a transmission medium such as a wired or wireless network or internet connection, or via combinations of these.

The software supplied at manufacture comprises system firmware and the Playstation 3 device's operating system (OS). In operation, the OS provides a user interface enabling a user to select from a variety of functions, including playing a game, listening to music, viewing photographs, or viewing a video. The interface takes the form of a so-called cross media-bar (XMB), with categories of function arranged horizontally. The user navigates by moving through the function icons (representing the functions) horizontally using the game controller 751, remote control 752 or other suitable control device so as to highlight a desired function icon, at which point options pertaining to that function appear as a vertically scrollable list of option icons centred on that function icon, which may be navigated in analogous fashion. However, if a game, audio or movie disk 440 is inserted into the BD-ROM optical disk reader 430, the Playstation 3 device may select appropriate options automatically (for example, by commencing the game), or may provide relevant options (for example, to select between playing an audio disk or compressing its content to the HDD 400).

In addition, the OS provides an on-line capability, including a web browser, an interface with an on-line store from which additional game content, demonstration games (demos) and other media may be downloaded, and a friends management capability, providing on-line communication with other Playstation 3 device users nominated by the user of the current device; for example, by text, audio or video depending on the peripheral devices available. The on-line capability also provides for on-line communication, content download and content purchase during play of a suitably configured game, and for updating the firmware and OS of the Playstation 3 device itself. It will be appreciated that the term "on-line" does not imply the physical presence of wires, as the term can also apply to wireless connections of various types.

In the following description, an image is understood to be a spatial arrangement of pixels. A pixel can hold one or more numerical values. These could represent many things, such as a greyscale value, or a colour value. Such values could be selected for artistic reasons (e.g. a photograph) or to visualise other data. By contrast, a binary image is an image where each pixel can be only either black or white. A binary image can be generated from an image representing multiple luminance or colour values by applying a threshold to the pixel values, possibly after combining different colour values to generate a luminance-only (monochrome) image. A so-called 'framed' binary image has the additional property that every pixel lying on the four boundaries of the image is of a single colour (black, or white). Unless stated otherwise, binary images can be assumed to be framed for the purposes of explanation below.

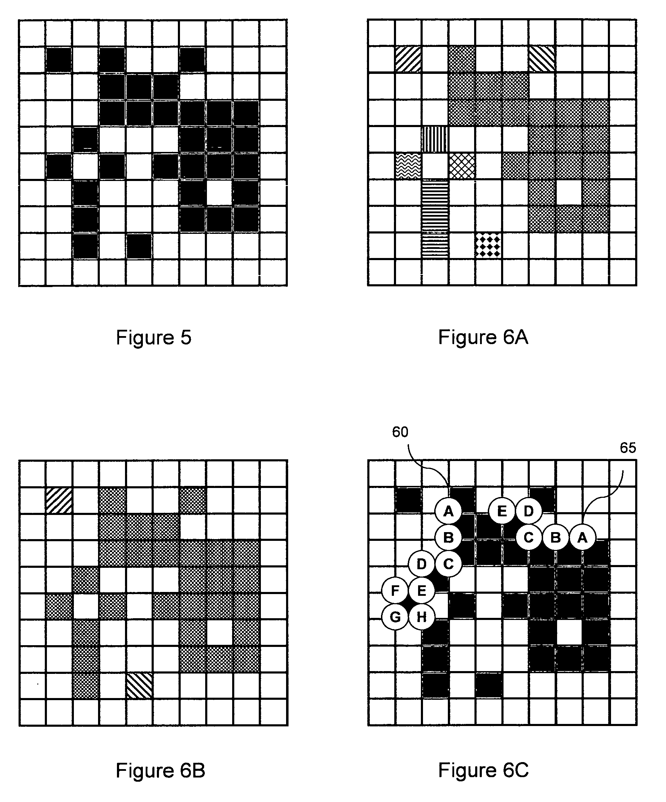

Figure 5 shows an example of a framed binary image. In this case, the frame is formed of white pixels. The image represents a detail from a larger binary image of a video capture. In the image, several regions, defined as connected groups of black pixels, can be seen. Whether these regions are treated as continuous or distinct can depend on whether four-way connectivity (up, down, left and right) or eight-way connectivity (as four-way, but also including diagonals) is used to evaluate how they intersect; in other words, whether they only connect face-on or also connect at corners. The type of connectivity therefore defines how many regions are represented: some groups of pixels will be considered separate if four-way connectivity is used, but will be considered as part of the same region if eight-way connectivity is used. Therefore, as will be seen below, the use of four-way connectivity generally gives rise to a larger number of separate regions than if eight-way connectivity were used. Both types of connectivity will be dealt with in the description which follows.

Figure 6A illustrates the eight regions identified if four-way connectivity is assumed, with each such region shaded distinctly. In a similar fashion, Figure 6B illustrates the three regions identified if eight-way connectivity is assumed, again with each such region shaded distinctly.

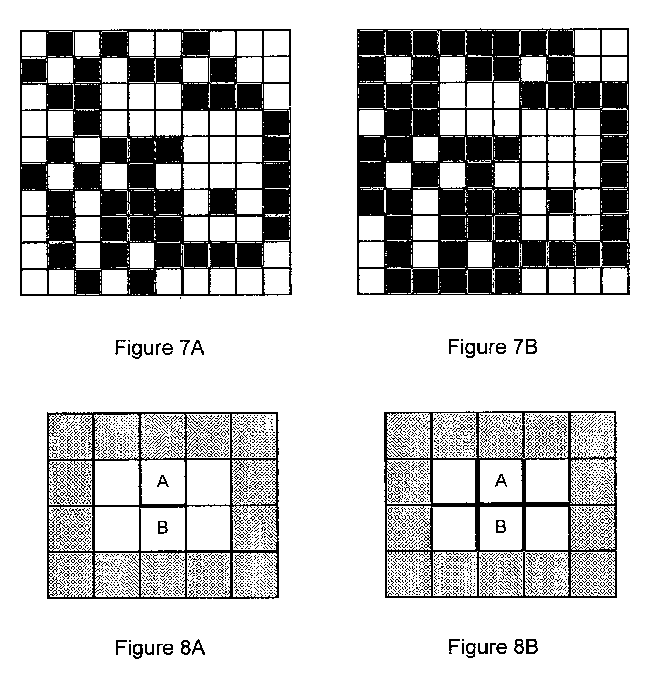

Likewise Figure 7A illustrates a conventional contour generated if four-way connectivity is assumed. The contour is identified by the black pixels in Figure 7A and follows around the edges of each of the regions identified in Figure 6A. Similarly Figure 7B illustrates a conventional contour generated if eight-way connectivity is assumed. Again the contour is identified by the black pixels and follows the edge of the regions identified in Figure 6B.

It can be seen that the contours of Figures 7A and 7B are highly ambiguous in terms of actually defining the regions or forming closed contours, and there is poor correlation between the contours generated and the identified regions of the original binary image.

Referring now to Figure 6C, it is also worth noting that applying the prior art Marching Squares algorithm (as detailed, for example, at http://en.wikipedia.org/wiki/Marching_squares) to the binary image of Figure 5 gives inconsistent results and causes the algorithm to become trapped in endless loops; for example, the marching sequence A-H (60) becomes trapped in an endless loop E-H, possibly because locally the E-H sequence resembles a '<' shape rather than a solid region. Meanwhile the marching sequence A-E (65) does not encompass the pixel above and to the right of position D, in a manner inconsistent with the previous sequence A-H (60), and could potentially miss an outlying feature such as that found in sequence A-H (60).

This problem can be addressed by the introduction of the concept of so-called 'edgels'.

Referring to Figure 8A, for every pair (A, B) of pixels abutting face-on, there exists an edgel, denoted in Figure 8A by the bold line between pixels A and B. This edgel forms a boundary between these two pixels (or equally it could be said that the pixels both border the edgel).

Figure 8B shows the possible edgels, found between the pixels A and B and other pixels, that neighbour the edgel between the pixels A and B. Such neighbouring edgels simply share an end point with each other; there is no four-way or eight-way definition of neighbouring edgels themselves, because edgels can only meet at an end point. However as will be explained below, rules for the analysis of edgels can be chosen to replicate the choice of four-way or eight-way *pixel* connectivity.

Starting from the definition of an edgel, a contour is then defined as a sequence of edgels where each consecutive edgel pair in the sequence shares an end point (i.e. they touch). A *closed* contour is formed of a contour having more than two edgels, such that the last edgel in the sequence shares an end point with the first one. In such a closed contour, the last and first edgels are considered to be consecutive; in other words, the choice of which edgel is the "first" and which is the "last" is arbitrary; the main distinction of a closed contour is that a sequence of neighbouring edgels can be followed or traced all the way round the closed contour and back to whatever starting point was chosen.

Edgels do not have a colour; they are not pixels. However, for clarity of the following description, the terms "black" or "white" will be applied to each edgel depending on the nature of the two pixels abutting that edgel. Black and white edgels may be defined as follows:

For horizontal edgels, if the pixel above is white and the pixel below is black, then define the edgel to be "white". However if the pixel above is black and the pixel below is white, then set the edgel to be "black".

For vertical edgels, if the pixel to the left is white and the pixel to the right is black, then set the edgel to be "white". However if the pixel to the left is black and the pixel to the right is white, then set the edgel to be "black".

No other edgels need to be considered for the purposes of finding contours in a binary image and hence no other edgels need to be defined as being white or black. In other words, edgels between like-coloured pixels can be effectively ignored. It will be appreciated that other definitions (such as reversing the assignment of white and black or the use of different nomenclature) will be apparent to the person skilled in the art.

Thus, more generally, an edgel is categorised according to the properties of the pixels that border it.

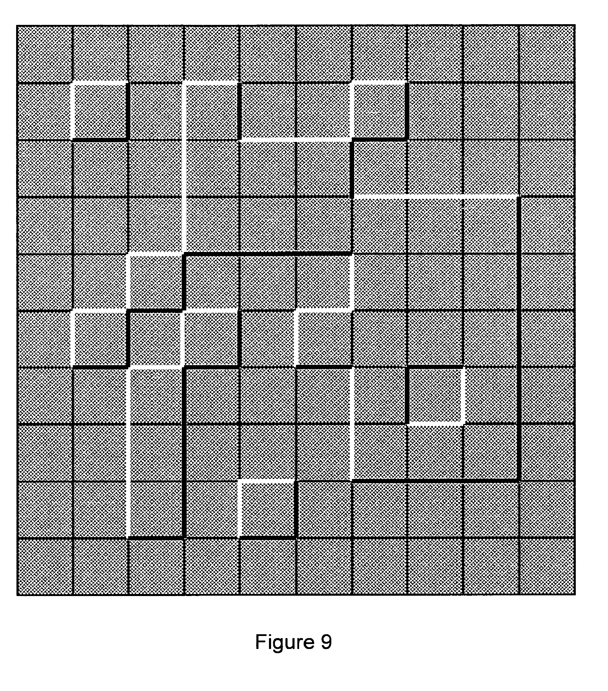

Referring to Figure 9, the result of the above evaluation is a notional edgel map. Figure 9 shows such an edgel map for the binary image of Figure 5. Note that as mentioned above, edgels between like-coloured pixels are undefined and are ignored. In Figure 9, black edgels are shown as heavy black lines, white edgels are shown as heavy white lines, and edgels between like coloured pixels are indicated by a thin line simply indicating the position of the pixel boundary; no significance is attached to such thin lines.

Whilst the representation in Figure 9 is perhaps intuitive to the reader and appears to show distinct regions and contours, it should be appreciated that this simplified representation of a small part of an image is for the purposes of understanding the present description. In practice, not only is the image size and complexity likely to be much greater, but also the edgels need to be machine-analysed in order to derive contours from them. As a first step towards such a machine analysis, the edgels are represented by codes in an (n-1)x(m-1) array corresponding to an n x m pixel image, as described below.

The basic principle underlying the encoding of the edgels is to consider a rolling window of 2x2 pixels and to establish whether each of the four edgels abutting pairs of pixels in that 2x2 window are white, black or neither. Note that edgels on the outer edge of the 2x2 window (i.e. edgels abutting one pixel in the window and one pixel outside the window) are not considered; they are handled by an adjacent instance of the window. With four edgels being considered, where each of the edgels can apparently have three states (black, white, undefined), at first sight it may appear that 3⁴ codes (81 codes) would be needed to define all of the permutations. However, given that each pixel in the 2x2 window must be either white or black, only 2⁴ (16) permutations of edgels are actually valid. Therefore the edgel content of the 2x2 window can be defined by a four bit binary value 0000 to 1111 (decimal 0 to 15).

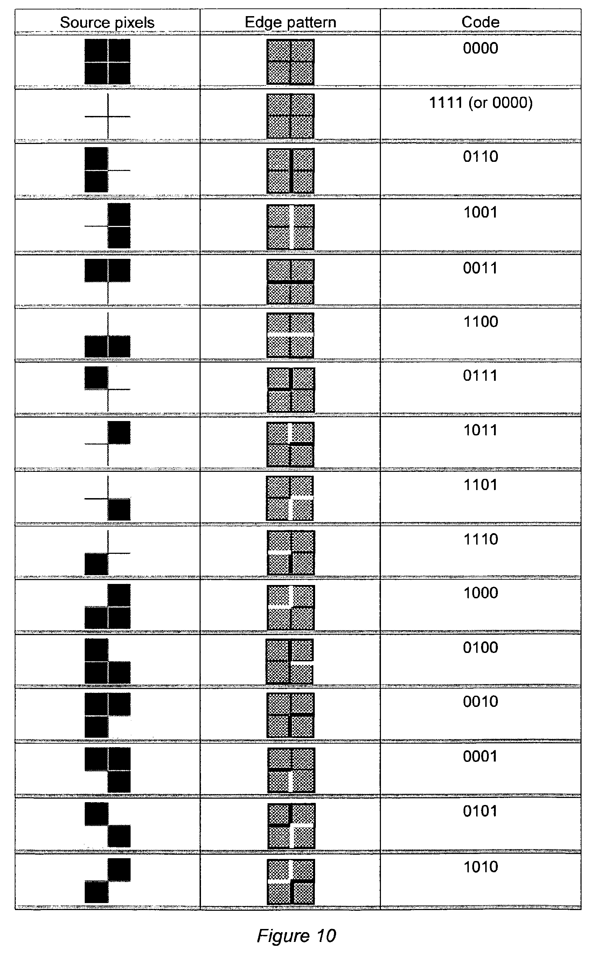

Referring to Figure 10, for each top-left pixel in the square window of four pixels, an associated edgel pattern can be characterised by one of these sixteen codes. It will be appreciated that a set of 2x2 pixels starting at co-ordinates (x,y) = (1,1) (from an origin at, say, the top left corner of the image) will potentially differ from a set of 2x2 pixels starting at co-ordinates (1,2) or (2,1) of the same image, even though 2x2 windows based on such pixels will overlap with one another. Consequently whilst the edgel codes represent a 2x2 pixel area defined by the window, such codes are generated with each possible pixel location in the image acting as the top-left pixel of the window.

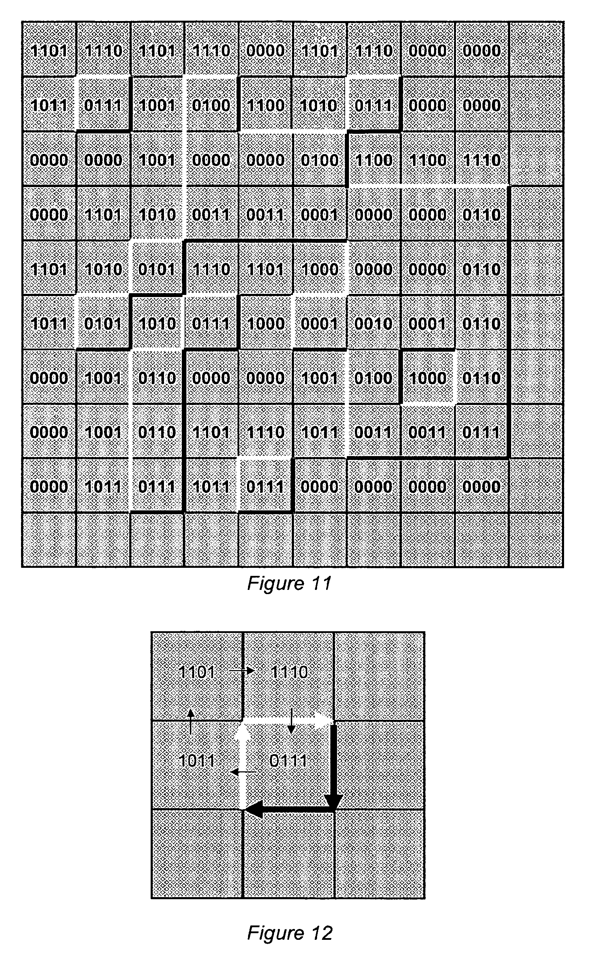

Thus in this arrangement the edgel map can be characterised by an array of codes for the edgel patterns associated with all but the far right and bottom lines of pixels (which are the only pixel positions in a rectangular image which cannot act as the top-left corner of a 2x2 window), as seen in Figure 11.

Figure 11 represents the edgel codes corresponding to the edgel map of Figure 9. For example, the top-left block of 2x2 pixels of Figure 9 has two white edgels in the positions associated with the edgel code 1101 (as seen in Figure 10), so code 1101 is associated with the top-left pixel position of that 2x2 block.

Having represented the edgels for an image, it is now possible to follow them to determine edges and, ultimately, closed edges or contours.

Prior-art systems, based on contour images such as those of Figures 1C and 1D, rely on tracing a path defined by the *pixels* in the contour image. This is done by searching, for each pixel position on the contour, for an adjacent pixel and where there is more than one adjacent pixel (as was seen to occur in Figure 1D), or a dead-end, using heuristics or branching searches to resolve the ambiguities. The search for adjacent pixels can use either four-way or eight-way connectivity as noted previously, and is itself computationally expensive.

By contrast, this searching, ambiguity and computational load is advantageously mitigated by the use of edgels, as detailed below.

Referring to Figure 12 (being similar to the top-left 3x3 pixels of Figure 11), an example of how a contour may be traced using edgels is shown.

Beginning at the top-left of the edgel code array, a search is conducted row-by-row for the first instance of a horizontal white edgel. In this example, the first horizontal white edgel occurs in the 2x2 block represented by the second code of the array, 1110. The edgel codes may then be used to trace the contour by associating directions of travel for the trace with the edgel codes.

In other words, as an edgel code is considered, the direction, relative to that edgel code in the code array, (the "output direction") in which the system should attempt to find the next edgel code is defined by two factors: what the current edgel code is, and from which direction (the "input direction") the current edgel code was approached.

Entries from a look-up table for output directions, in which just a small subset of the available permutations of edgel code and input direction (being those values relevant to the example of Figure 12) are shown, is given in Table 1 below.

For the edge seen in Figure 12, the sequence of moves can be summarised as:

**Table 1 - association between edgel codes and direction of analysis for the simplified example of Figure 12**

| Step | Input direction | Edgel code | Next (output) direction |
|---|---|---|---|
| 1 | → | 1110 | ↓ |
| 2 | ↓ | 0111 | ← |
| 3 | ← | 1011 | ↑ |
| 4 | ↑ | 1101 | → |

This small subset of the rules for defining output directions allows the system to trace around the small closed contour shown by the four edgels in Figure 12. The output direction defines which is the next edgel code to be considered. Note that the output direction for one edgel code becomes the input direction for the next edgel code to be considered.

A more general arrangement will now be described.

Considering the very first horizontal white edgel code, i.e. the edgel code found first to satisfy the row-by-row search for a horizontal white edgel, the direction options are:
- If the white horizontal edgel terminates at a black vertical edgel (which will always be below), then move down;
- If the white horizontal edgel terminates at a white vertical edgel (which will always be above) then move up;
- If the white horizontal edgel terminates at a white horizontal edgel (which will always be to the right) then move to the right.

In Figure 12, the first white horizontal edgel terminates at a black vertical edgel and so the associated direction in which to trace the contour is 'down'. This is step 1 of Table 1 above.

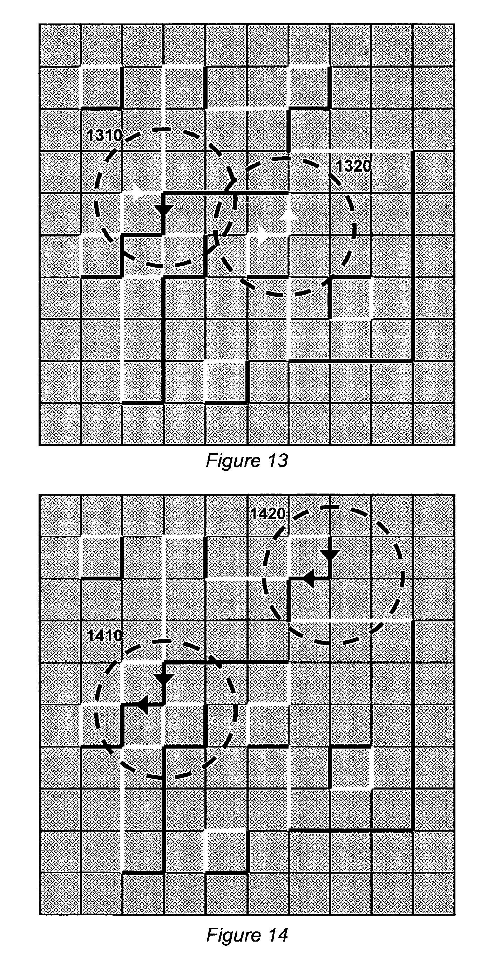

More generally, it is ***the first valid option in the above sequence*** which is used to derive the output direction. Thus for example also referring to Figure 13, the horizontal white edgel code in the edgel pattern 1310 terminates (to its right hand side) at a white and a black vertical edgel. Accordingly, both the first and second options are possible but the convention adopted in the present system is that the first option is the one used. By contrast, in the edgel pattern 1320, the horizontal white edgel terminates in only one next edgel: a white vertical edgel. Therefore only the second option is possible and that option is used.

The above rule priority replicates four-way connectivity, thereby tracing contours for regions only including pixels that neighbour face-on. If desired, eight-way connectivity (for regions also including pixels that neighbour at corners) can be generated by swapping the precedence of the first two rules.

Referring back to the simplified example of Figure 12, having selected the first option in this example (output direction = down), then moving down one position in the edgel code array results in an input 'down' direction for the edgel code 0111. From table 1, this results in an output 'left' direction. Following the leftward direction leads to the edgel code 1011 with a 'left' input direction. The output direction is "up", leading to edgel code 1101 and an 'up' input direction, resulting in an output 'right' direction that takes the sequence back to its starting point.

The full set of associations is discussed in more detail below.

Suitable rules for determining the next direction for each of the remaining edgel patterns will be apparent to a person skilled in the art. For example, referring to Figure 14 it is apparent that if a black vertical edgel terminates at a black horizontal edgel (which will always be to the left) then the associated output direction should be 'left'. For replicating four-way connectvitiy this rule takes precedence over the presence or absence of neigbouring white edgels to the right or below (as seen in examples 1410 and 1420 of Figure 14). In practice this is achieved by applying the same rule for the respective edgel codes and directions for patterns whether white edgels are present or absent. By contrast, to replicate eight-way connectivity, neighbouring white edgels to the right or below take precedence.

Thus in general, and using the intuitive visual impression of the black and white edgels seen in Figure 9, the rules are constructed to follow the apparently embossed outline of each region, either for pixels only neighbouring face to face in the case of replicating four-way connectivity, or also for pixels neighbouring at corners in the case of replicating eight-way connectivity.

Examples of such rules for four-way connectivity are given in Table 2 below.

Using such a suite of rules, a simple look-up table can be compiled that relates input directions for each edgel code to output directions (or, in an alternative arrangement, relates edgel codes for each input direction to output directions, as seen in Table 2 below). The output direction determines the next edgel code to analyse in the edgel array and also becomes the input direction for that edgel code.

**Table 2 - First 11 entries in direction look-up table**

| **Input direction** | **Edgel code** | **Output direction** |
|---|---|---|
| → | 1100 | → |
| → | 1110 | ↓ |
| → | 1000 | ↑ |
| → | 1010 | ↓ |
| → | 0101 | ↓ |
| ↓ | 0110 | ↓ |
| ↓ | 0111 | ← |
| ↓ | 0110 | → |
| ↓ | 0101 | ← |
| ↑ | 1001 | ↑ |
| ↑ | 1101 | → |
| ... | ... | ... |

Thus the process of tracing an edge, and hence a contour, is reduced to an iterative search within a look-up table of edgel codes and directions. This is computationally a very simple and fast process.

As proposed above, a search for an edge may be initiated by looking for a first white horizontal edgel (though in principle the first instance of any specific edgel could be used). To avoid the need to track which edgels have already been identified in an edge when searching for subsequent edges, edgels can be effectively erased as the edge tracing process occurs, by substituting the current edgel code for the edgel code that corresponds the edgel pattern with that particular edgel omitted.

Some examples of this are shown in Table 3 overleaf, and with reference to Figure 10. Notably, this arrangement is possible because the generation of the edgel code map using the 2x2 windows means that information from the binary image is duplicated - by contrast, when operating directly upon pixels of the binary image (as in the prior art) then the deletion of pixels would be undesirable.

| Last direction | Edgel code | Next direction | Replacement edgel code |
|---|---|---|---|
| → | 0011 | → | 0000 |
| → | 1100 | → | 0000 |
| → | 0111 | ↑ | 0000 |
| → | 1110 | ↓ | 0000 |
| → | 1000 | ↑ | 0000 |
| → | 0001 | ↓ | 0000 |

For 4-way connectivity:

| | | | |
|---|---|---|---|
| → | 1010 | ↓ | 1011 |
| → | 0101 | ↑ | 1101 |

For 8-way connectivity:

**Table 3: Example subset of replacement edgel patterns**

| | | | |
|---|---|---|---|
| → | 1010 | ↑ | 0010 |
| → | 0101 | ↓ | 0100 |

In practice, most regions in binary images are not as compact and entwined as the schematic example shown in the Figures. Consequently, as an approximation, visited edgel codes could be replaced with an empty (no edgels) code such as 0000 for all cases, including codes 1010 and 0101 above. In the event that an edge returns to an edgel pattern that has been erased in this manner, the edgel code can be recalculated or recalled as a special case (for example, by reference to previous edgel codes). This can be computationally more efficient than the updating and tracking of visited edgels if the proportion of edgel codes which need to be recalculated or recalled is sufficiently low. This proportion can be empirically determined and is likely to be influenced by the processor and memory architectures, the source image resolution and the binary thresholding strategy employed. A decision can then be made on whether to adopt the above approximation.

It will be appreciated that a contour can now be defined purely in terms of the starting point and the determined sequence of directions. The four possible directions can each be represented by a code, for example using two binary bits, or four flag bits. For example the directions can be represented as:

| | |
|---|---|
| Right | 0001 (R) |
| Left | 0100 (L) |
| Up | 0010 (U) |
| Down | 1000 (D) |

Here, the letter suffix (R, L, U, D) is simply for clarity for the reader; the machine would recognise the four bit code alone.

A contour will be closed if there is an equal, non-zero, number of right and left directions and an equal, non-zero, number of up and down directions amongst the set of direction codes defining that contour. In addition clearly the sequence of edgels should return to the starting position.

Characteristics of such a closed contour, including whether it bounds the outside of a region or a void within a region, and the inclusive area of such a contour, can also be determined during the tracking process, as described below.

The type of closed contour may be determined by the scheme seen in Table 4 below, which determines a so-called 'winding value' for a contour (Four permutations where a direction doubles back on itself do not occur in a real contour, and are marked as 'not applicable'):

**Table 4 - Winding value rules**

| **First direction** | **Second direction** | **Change to winding value** |
|---|---|---|
| 0001(R) | 0001(R) | 0 |
| 0001(R) | 0010(U) | -1 |
| 0001(R) | 1000(L) | Not applicable |
| 0001(R) | 1000(D) | +1 |
| 0010(U) | 0001(R) | +1 |
| 0010(U) | 0010(U) | 0 |
| 0010(U) | 1000(L) | -1 |
| 0010(U) | 1000(D) | Not applicable |
| 0100(L) | 0001(R) | Not applicable |
| 0100(L) | 0010(U) | +1 |
| 0100(L) | 1000(L) | 0 |
| 0100(L) | 1000(D) | -1 |
| 1000(D) | 0001(R) | -1 |
| 1000(D) | 0010(U) | Not applicable |
| 1000(D) | 1000(L) | +1 |
| 1000(D) | 1000(D) | 0 |

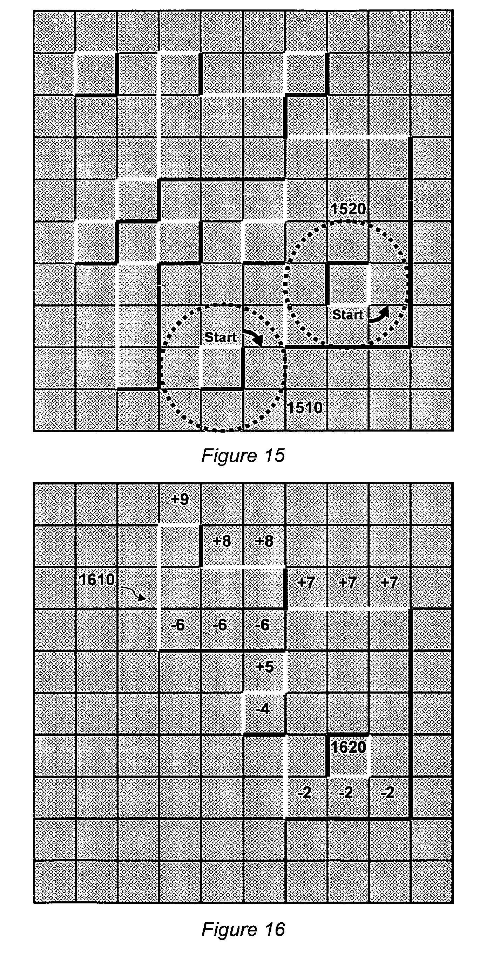

Referring now also to Figure 15 and starting with a winding value of 0 (at any arbitrary point on a closed contour), if upon tracking edgels and returning to the start point the winding value has reached +4, then a closed contour 1510 bounding the outside of a region has been found (a so-called clockwise contour). If the value has reached -4 then a closed contour 1520 bounding the inside of a region has been found (a so-called anticlockwise contour).

Comparing Figure 15 and Figure 5, it can be seen that the closed contour 1510 surrounds a black region (a single black pixel in this example) while the closed contour 1520 traces the inside of a single pixel white hole within a surrounding black region. The definitions "clockwise" and "anti-clockwise" are arbitrary and could be reversed if a different convention were used, but the important feature is to be able to distinguish internal edges and external edges of regions.

It will be appreciated that the appropriate change to the winding value can be added to the main edge-tracing lookup table for ease of implementation. Thus a contour can be determined to be closed when it reaches its start position, and it can be determined whether the contour is a clockwise or anticlockwise contour according whether its winding value is +4 or -4.

The winding values of ±1 are themselves arbitrary choices, except in so far as they should have different respective polarities. So, ± any value could be used, with the positive and negative polarities in the above description being reversed if desired. If, say, ±3.5 were used, then the tests would be for a total value of + 14 or -14.

The inclusive area of the closed contour can also be readily determined as follows. First, in respect of a contour under test, zero a running total value. Then, for a white horizontal edgel, add to the running total the number of pixels between the edgel and the bottom of the image. For a black horizontal edgel, subtract from the running total the number of pixels between the edgel and the bottom of the image.

Starting with a running total of 0 at the first white horizontal edgel, the running total will reach the inclusive area of the region bounded by the contour when the winding value equals 4 and the edge returns to the start point.

Thus in the example of Figure 16, the values in respect of a closed contour 1610 are: (0)+9+8+8+7+7+7-2-2-2-4+5-6-6-6 = 23. This is the inclusive area of the region 1610, also including voids such as region 1620.

Again it will be appreciated that an alternative arrangement is possible, such as adding the number of pixels above a black horizontal edgel and subtracting those above a white horizontal edgel, or those to the left or right of respective vertical edgels; the principle is the same.

Whilst the above steps significantly simplify the process of detecting edges and closed contours, it is still a non-trivial task if applied to a sequence of moderate resolution images (e.g. 640x480 pixels) at video frame rates (e.g. 60 frames per second).

Consequently it may prove desirable to execute the process in parallel.

Referring back to Figure 2, recall that the PS3 comprises a plurality of processors (SPEs). The on-board memory available to each processor is limited, and consequently it may prove necessary for one SPE to process only a portion of an image at a time.

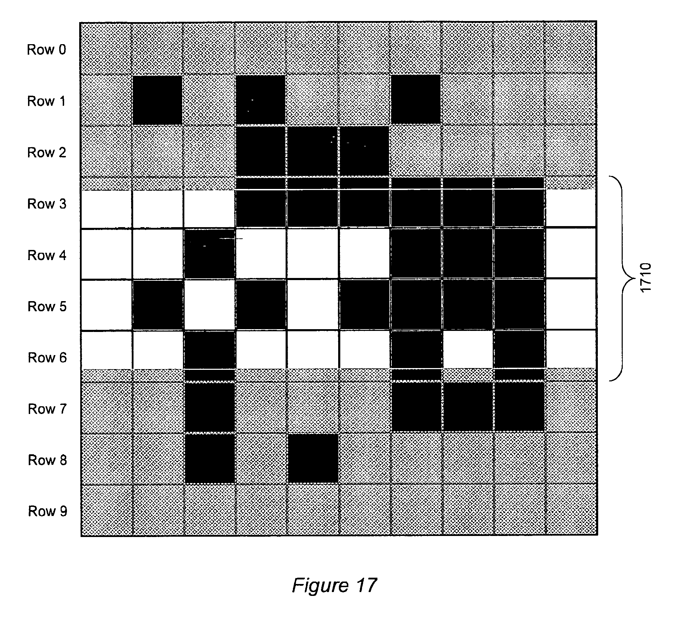

Referring to Figure 17, a portion or strip 1710 of the binary image can be presented to a respective SPE of the Cell processor, enabling the binary image to be processed in parallel.

The strip notionally runs halfway through the top and bottom pixel of the strip. Thus in practice respective strips overlap each other by one pixel, but the edgels above the top pixels and below the bottom pixels are not included in the strip. However, edgels perpendicular to the top or bottom of the strip are included in each strip.

A consequence of cutting the binary image into strips is that closed contours within the binary image may not be wholly included within a strip. Therefore in addition to closed contours found wholly within a strip (which are found as described above), partial contours that may form part of a larger closed contour should also be characterised. In practice these are looked for before the wholly enclosed contours, as detailed below.

A start point for such a contour within a strip may be found by searching for any black vertical edgels in the top row, as these must come from an edge that also occupies the image strip above. Such contours may be referred to as upper contours.

The edge (or partial contour) of such an upper contour is found by tracing the edgels in the manner described previously, and the winding value and partial area can be similarly tracked. The information gathered from this upper contour is then stored in a buffer. The buffer for the top of one strip will correspond to the buffer for the bottom of the strip above (if there is one).

At the point of entry and/or exit of a contour in the top row, the direction, area and winding value information is stored in the respective buffer.

In a similar manner, white vertical edgels in the bottom row can be detected and evaluated as the start point of so-called lower contours.

As before, for each lower contour at least its start position, end position and the current winding and area values are stored in a buffer.

Having identified partial contours starting in the top or bottom row of the strip, the strip can then be further framed by making the top and bottom rows blank, before reapplying the process to find any closed contours existing wholly within the strip.

Thus in addition to contours wholly contained within strips, there is a succession of buffers containing partial contour data for the upper and lower contours of each strip.

Next, an upper join buffer and a lower join buffer are created; for an *n*-pixel wide strip of image an *n*-slot join buffer is provided (or alternatively an *n*-2 slot buffer, since no contours will occupy the outermost framing pixels). Each slot can hold a pointer to the data for a partial contour.

Pointers to partial contour data are then stored in slots of the join buffers corresponding to the respective start and end positions of the partial contours for each image strip.

Partial contours are then joined by determining where start and end points for partial contours coincide in neighbouring join buffers (e.g. the lower join buffer of a first upper strip and the upper join buffer of a second lower strip). The pointers associated in this manner allow access to the buffers containing start position, end position and the current winding and area values for each part of the overall contour, enabling determination as to whether a contour is closed, its overall size and whether it is clockwise or anticlockwise.

If desired, as previously the data characterising the complete contour (its start, directions, winding value, area, or some of these details) can then be stored wholly and/or passed to further processes transparently, without reference to joining buffers or image strips.

It will be appreciated that vertical strips could be used instead of horizontal strips, with appropriate changes to the start/end conditions (e.g. a black horizontal edgel on the right hand side of a vertical strip can be a start point).

It will be appreciated that in all the above description, the categorisation of edgels as black or white can be changed, with suitable corresponding changes to the direction, area and winding calculations. With reference to the explanatory illustration of Figure 9, the effect would be as if a light was shining from one of the other three corners, rather than the top left corner.

It will be appreciated that a contour (closed or otherwise) found using edgel analysis can also be used to generate a corresponding pixel-based contour on the original or binary image. In the case of a closed edgel-based contour, this may take the form of those pixels either immediately inside or outside the edgel-based contour (if the edgel based contour is notionally superposed upon the image). For example, a pixel immediately inside the edgel based contour may be defined as such if it abuts a white horizontal edgel from below, or a white vertical edgel from the right, a black horizontal edgel from above, or a black vertical edgel from the left (given that these edgels are part of the contour). A similar predetermined relationship may be specified for pixels immediately outside the edgel based contour (using either four-way or eight-way connectivity). It will be appreciated that such general rules can also be applied to open contours to generate pixel-based contours. Pixel-based contours may be generated whilst the edgel-based contour is being traced, or may be generated as a separate subsequent process.

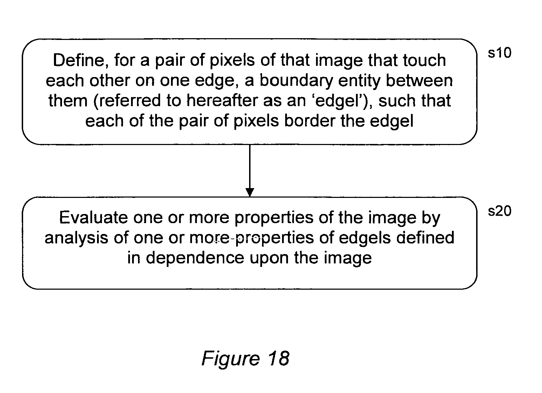

Referring now to Figure 18, a corresponding method of image analysis comprises:
in a first step s10, defining, for a pair of pixels of that image that touch each other on one edge, a boundary entity between them (referred to hereafter as an 'edgel'), such that each of the pair of pixels border the edgel; and
in a second step s20, evaluating one or more properties of the image by analysis of one or more properties of edgels defined in dependence upon the image.

It will be apparent to a person skilled in the art that variations in the above method corresponding to operation of the various embodiments of the apparatus described above are considered within the scope of the present invention, including but not limited to:
- applying a binary threshold to the image and classifying edgels as being black or white, according to the pattern of adjacent binary pixels, as described herein;
- representing edgels as an array of edgel codes, each code representing the edgel pattern an area, such as a 2x2 pixel area, with respect to a pixel position, as described herein;
- generating a table associating input directions and edgel codes with output directions, as described herein;
- using the table to determine which edgel code and direction to use next as inputs to the table, as described herein;
- updating a winding value according to whether successive pairs of directions form clockwise or anticlockwise turns, as described herein;
- speculatively erasing visited edgel codes and only re-assessing them if an edge revisits the erased code, as described herein;
- determining the area of a contour as described herein;
- breaking the image up onto overlapping horizontal strips, and propagating edge tracking information between the strips by use of joining buffers, as described herein; and
- acquiring the image from a camera linked to the PS3.

It will be appreciated that the above method can be carried out on, for example, the PS3 when suitably adapted, and that this adaptation may be by the use of software.

Thus the required adaptation to existing parts of a conventional equivalent device may be implemented in the form of a computer program product, comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the conventional equivalent device.

It will also be appreciated that embodiments of the present invention as disclosed above provide some or all of the following advantages:
- the core process for contour tracking is simply a look-up table, which is simple to implement and computationally efficient;
- edgels resolve any ambiguity in direction found when using a pixel-based edge;
- contours never double back on themselves, as can occur with a pixel-based edge;
- contours never reach a dead-end, as can occur with a pixel-based edge;
- additional information is readily obtained, including whether the contour contains or is contained by a region, and the inclusive area of the contour; and
- the image can be processed in parallel using strips.

## Claims

1. A method of processing an image, comprising the steps of:
defining, for a pair of pixels of the image that touch each other on one edge, a boundary entity between them (referred to hereafter as an 'edgel'), such that each of the pair of pixels border the edgel; and
evaluating one or more properties of the image by analysis of one or more properties of edgels defined in dependence upon the image.

2. A method according to claim 1 comprising the steps of:
applying a binary thresholding operation to the image; and
classifying an edgel in a first or a second category according to characteristics of the binary thresholded pixel pair that border it.

3. A method according to claim 2, in which:
if the bordering pixel above a horizontal edgel is white and the bordering pixel below is black, then the horizontal edgel is classified in the first category;
if the bordering pixel above a horizontal edgel is black and the bordering pixel below is white, then the horizontal edgel is classified in the second category;
if the bordering pixel to the left of a vertical edgel is white and the bordering pixel to the right is black, then the vertical edgel is classified in the first category; and
if the bordering pixel to the left of a vertical edgel is black and the bordering pixel to the right is white, then the vertical edgel is classified in the second category.

4. A method according to any one of the preceding claims, comprising the steps of:
representing edgels by an edgel code associated with a selected pixel, the edgel code corresponding to the pattern formed by said edgels within a subsection of the image positioned with respect to the selected pixel; and
generating an array of said edgel codes each formed with respect to a respective pixel in a contiguous array of pixels of the image.

5. A method according to claim 4, comprising the steps of:
detecting a set of edges representing a contiguous contour by iteratively:
selecting an edgel code of the array and a direction value; and
selecting a subsequent direction value responsive to the selected edgel code of the array and the direction value; and
selecting a subsequent edgel code of the array in response to the subsequent direction value, the subsequent direction value indicating the direction from the current selected edgel code to the subsequent edgel code.

6. A method according to claim 5, in which the step of selecting a subsequent direction value comprises the step of:
accessing a table of associations between an input direction value, an edgel code and a subsequent direction value, the input direction value indicating the direction from the preceding selected edgel code to the current selected edgel code.

7. A method according to claim 5 or claim 6, in which a first selected edgel code comprises an edgel satisfying a start condition, and the first selected direction value is a default start value associated with the start condition.

8. A method according to any one of claims 5 to 7 comprising the steps of:
incrementing a turn counter when a first direction value followed by a second direction value generates a turn in a first turn direction;
decrementing the turn counter when a first direction value followed by a second direction value generates a turn in a second turn direction different to the first turn direction;
detecting whether a sequence of direction values leads back to a start position, thereby denoting a closed contour; and
categorising a closed contour according to whether the turn counter has a net value indicative of a complete 360° turn in the first turn direction or a complete 360° turn in the second turn direction.

9. A method according to any one of claims 4 to 8, comprising the steps of:
replacing a first edgel code of the array with a replacement code signifying that no edgels of a first or second category are present; and
if that position in the edgel code array is revisited, re-evaluating the edgel code for that position and changing the edgel code if the evaluation determines that edgels of a first or second category are present.

10. A method according to any one of claims 5 to 8, comprising the step of:
replacing a first edgel code of the array with a replacement edgel code corresponding to an edgel pattern in which the edgels that represent a part of the detected contiguous contour are removed.

11. A method according to any one of the preceding claims, comprising the steps of:
for a sequence of connected edgels,
adding to an area counter the number of pixels on a first side of an edgel having a first orientation and classified in a first category;
subtracting from the area counter the number of pixels on a first side of an edgel having the first orientation and classified in a second category; and
setting the inclusive area of the sequence of connected edgels to be equal to the net value of the area counter.

12. A method according to any one of the preceding claims, comprising the step of:
breaking the image into two or more strips for separate analysis, with adjoining strips overlapping each other by one pixel width;
generating a pair of buffer arrays for each instance of overlap, one for each overlapping strip;
and for each overlapping strip,
storing in the buffer array corresponding to an overlap region of a strip the direction values, area counter values and turn counter values relating to a sequence of edgels in that strip which ends at an edgel in a region of overlap.

13. A method according to any one of claims 5 to 12, comprising the step of: detecting pixels of the image whose position corresponds to the detected contiguous contour in accordance with a predetermined relationship.

14. A computer program for implementing the method of any preceding claim.

15. Apparatus for processing an image, comprising
image processing means arranged to define, for a pair of pixels of the image that touch each other on one edge, a boundary entity between them (referred to hereafter as an 'edgel'), such that each of the pair of pixels border the edgel; and
image evaluation means arranged to evaluate one or more properties of the image by analysis of one or more properties of edgels defined in dependence upon the image.

16. Apparatus according to claim 15, comprising
edgel processing means arranged to represent edgels by an edgel code corresponding to the pattern formed by said edgels within a subsection of the image positioned in fixed relationship to a selected pixel; and
direction association means arranged to associate a first direction value with a second direction value in response to a respective edgel code.
